Europäisches Patentamt

European Patent Office

Office européen des brevets

(19)

(11) Numéro de publication: **0 089 264**
**B1**

(12) **FASCICULE DE BREVET EUROPEEN**

(45) Date de publication du fascicule du brevet: **04.01.89**

(51) Int. Cl.⁴: **G 11 B 27/28,** G 11 B 7/00

(21) Numéro de dépôt: **83400428.5**

(22) Date de dépôt: **02.03.83**

(54) **Procédé et dispositif de génération de signaux de synchronisation dans un appareil optique d'écriture-lecture de support d'information.**

(30) Priorité: **12.03.82 FR 8204219**

(43) Date de publication de la demande:
**21.09.83 Bulletin 83/38**

(45) Mention de la délivrance du brevet:
**04.01.89 Bulletin 89/01**

(84) Etats contractants désignés:
**DE GB IT NL SE**

(56) Documents cités:
**EP-A-0 021 411**
**EP-A-0 032 271**
**FR-A-2 261 586**
**US-A-3 247 491**
**US-A-3 601 537**
**US-A-3 815 108**

**ELECTRONIQUE, no. 272, septembre 1979,
pages 29-34, Paris, FR; M.ASTIER et al.:
"Interface de télé-acquisitions et de
télécommandes industrielles sur deux fils"**

(73) Titulaire: **THOMSON-CSF
173, Boulevard Haussmann
F-75379 Paris Cédex 08 (FR)**

(72) Inventeur: **Gerard, Jean-Louis
THOMSON-CSF SCPI 173, bld Haussmann
F-75379 Paris Cedex 08 (FR)**
Inventeur: **Lehureau, Jean-Claude
THOMSON-CSF SCPI 173, bld Haussmann
F-75379 Paris Cedex 08 (FR)**
Inventeur: **Loret, Marc
THOMSON-CSF SCPI 173, bld Haussmann
F-75379 Paris Cedex 08 (FR)**

(74) Mandataire: **Grynwald, Albert et al
THOMSON-CSF SCPI 19, avenue de Messine
F-75008 Paris (FR)**

Courier Press, Leamington Spa, England.

## Description

La présente invention se rapporte à un procédé de génération de signaux de synchronisation utilisés dans un appareil de transcription optique de données sur un support d'information, pendant les phases d'écriture et/ou de lecture, notamment de données numériques enregistrées sur un disque. Elle concerne également un dispositif optique de mise en oeuvre de ce procédé.

Les méthodes d'enregistrement sont bien connues de l'homme de métier et sortent du cadre de la présente invention. Le plus souvent, ces informations sont enregistrées sous forme de microreliefs le long de pistes ayant la configuration de spirale ou de cercles concentriques, cette dernière configuration étant la plus usitée lorsqu'il s'agit d'enregistrer les données numériques. Elle facilite notamment l'accès aléatoire à une donnée enregistrée ainsi qu'un enregistrement divisé en blocs ou secteurs.

Lors de la lecture, quelle que soit la méthode d'enregistrement, il est nécessaire de disposer de signaux permettant la synchronisation de cette lecture. Pour ce faire, de nombreuses méthodes sont également connues.

Selon une première méthode, dans les systèmes dits multipistes, à chaque piste réservée à l'enregistrement d'information utile est associée au moins une autre piste le long de laquelle sont enregistrées diverses informations et notamment des signaux d'horloge permettant la synchronisation de la lecture de l'information utile. Dans une variante de réalisation, les pistes destinées à la synchronisation sont prégravées et comportent des perturbations régulièrement espacées décelables optiquement. Lors de la lecture, dans une première variante (système multifaisceau), un premier faisceau est focalisé sur la piste d'information utile utilisé pour lire ces informations, et un second faisceau, séparé mais en relation de couplage mécanique constant avec le premier, est utilisé pour lire les informations de synchronisation. Dans une seconde variante, (système monofaisceau) un seul faisceau lit les deux informations. Dans ce cas, il est nécessaire que les deux types d'informations puissent être aisément discriminés. A titre d'exemple, les spectres de fréquences associés à ces informations peuvent être différents. Dans cette variante les informations de synchronisation prégravées peuvent également être utilisées pendant la phase d'écriture. Il est connu du document EP—A—0032271 un support d'information correspondant à la seconde variante mentionnée ci-dessus mais dont la lecture met en oeuvre l'exploration de la piste avec deux faisceaux dont les points d'impact sont en retrait l'un par rapport à l'autre. Il est prévu le recalage en phase d'un signal d'horloge lu par le premier faisceau avec une portion du signal d'horloge lu par le second faisceau.

Pour augmenter la densité d'enregistrement possible, il a été également proposé d'utiliser une seule piste. Dans ce cas, les signaux d'horloge de synchronisation peuvent être dérivés de la lecture de l'information elle-même.

Pour rendre plus aisée la synchronisation, on utilise classiquement des codes dits auto-synchronisants ou à maximum de transitions, quelque soit le contenu de l'information source à enregistrer. En effet, de façon pratique, les microreliefs présentent deux niveaux de référence, associés aux valeurs logiques "0" et "1" respectivement. Les signaux de synchronisation sont dérivés de la détection des transitions d'un niveau déterminé à l'autre et sont utilisés pour asservir en fréquence et en phase un oscillateur, classiquement de type à commande en tension (connu sous le sigle V.C.O., de l'expression anglo-saxonne "Voltage controlled oscillator") munie d'une boucle de rétroaction à verrouillage de phase (P.L.L.: "phase lock loop"). En outre, des salves spéciales d'impulsions enregistrées sont utilisées pour initialiser l'asservissement.

Cependant ce type de codage ne permet pas une densité maximale d'enregistrement. Il est également connu pour augmenter cette densité, d'utiliser des codes non auto-synchronisants per exemple le code N.R.Z. (non retour à zéro). Ce type de code a pour caractéristique de ne pas présenter de transition d'un bit d'information à l'autre si ces deux bits restent à la même valeur logique. Il est alors plus difficile de dériver, de la lecture de l'information ainsi codée, les signaux nécessaires à la synchronisation.

La présente invention se propose de pallier les inconvénients de l'art connu tout en conservant la possibilité d'une densité maximale d'enregistrement. Pour ce faire, le procédé de l'invention consiste à disposer le long des pistes, régulièrement ou non, des éléments enregistrés utilisés pour la synchronisation ou drapeaux. Naturellement ces drapeaux doivent être "transparents" aux circuits électroniques chargés de détecter et de traiter les informations utiles. Ces échantillons de synchronisation servent à resynchroniser à chaque passage d'un drapeau sous une tête de lecture les circuits générateurs de signaux de synchronisation.

L'invention a donc pour objet un procédé de génération de signaux de synchronisation dans un appareil de transcription optique de données numériques sur un support animé d'un mouvement d'exploration; lesdites données étant enregistrées sous forme de perturbations d'au moins une couche de matériau du support, optiquement détectables le long de pistes de configuration déterminée; lesdites pistes comportant une succession de sites non-contigus dédiés au stockage desdites données entre lesquels sont intercalés des sites dédiés à un autre usage; ledit appareil comportant des moyens pour focaliser en une tache d'exploration, au moins un faisceau d'énergie lumineuse sur une desdites pistes, des moyens optoélectroniques de détection de l'interaction de ce faisceau avec lesdites perturbations défilant sous la tache d'exploration et des moyens sélecteurs reliés à ces moyens optoélectriques pour délivrer un signal caractéristique du contenu desdits sites intercalaires; procédé caractérisé en ce qu'il comprend les étapes suivantes:

—inscription exclusivement dans lesdits sites intercalaires de données numériques spécifiques sous forme d'une suite de perturbations de ladite couche de matériau produisant des transitions jouant le rôle de référence par rapport auxdits signaux de synchronisation mais dont les écarts sont discernables de ceux mis en ouvre pour la transcription desdites données numériques;

—génération locale, à l'extérieur du support, d'un signal périodique d'horloge comportant un élément définissant un instant de référence à mettre en rapport avec la transcription desdites données.

—identification sélective des données numériques spécifiques par lesdits moyens sélecteurs.

—détermination par lesdits moyens sélecteurs de l'instant de référence ($T_B$) issu de l'exploitation d'une transition dont la sélection est commandée avec un retard déterminé par rapport à une autre transition; ladite transition et l'autre transition étant produites par la même perturbation inclue dans lesdites données numériques spécifiques (92) en réponse à l'exploration par ladite tache (ta) desdits sites intercalaires, ledit retard dépendant de la durée estimée existant entre ces deux transitions.

—détermination du décalage de cet instant de référence avec l'instant de référence propre audit signal périodique d'horloge;

—et génération d'un signal de synchronisation à partir dudit signal périodique d'horloge corrigé en phase proportionnellement audit décalage.

L'invention a encore pour objet un dispositif de mise en oeuvre d'un tel procédé et le support d'information particulièrement adapté à ce procédé.

L'invention sera mieux comprise à l'aide de la description qui suit en référence aux figures annexées et parmi lesquelles:

—la figure 1 illustre deux types de codes mis en oeuvre pour le codage d'un même mot binaire;

—la figure 2 illustre schématiquement la configuration d'une piste d'un support d'information conforme à l'invention;

—la figure 3 est un diagramme illustrant un code particulier mis en oeuvre dans une variante préférée de l'invention;

—les figures 4 et 5 sont des diagrammes synoptiques de dispositifs selon deux variantes d'exécution de l'invention;

—les figures 6 et 7 représentent de façon plus détaillée certains éléments de ces dispositifs;

—la figure 8 est un diagramme sur lequel sont représentés des signaux les plus significatifs du fonctionnement du dispositif selon l'invention et leurs interrelations temporelles.

—la figure 9 représente schématiquement un appareil optique d'enregistrement-lecture dans lequel le dispositif de l'invention peut être mis en oeuvre.

Les procédés d'inscription d'informations sur un disque optique sont bien connus. Habituellement le disque comporte au moins une couche, généralement superficielle, en matériau sensible à certains types de radiations. Selon un des procédés les plus connus, lors de l'inscription, on focalise un faisceau généré par une source laser sur cette couche de matériau et on crée par effet thermooptique des microreliefs le long des pistes. Ces pistes peuvent être virtuelles, c'est à dire être créées au moment de l'inscription des données, ou encore être prégravées sous quelque forme que ce soit. Les procédés de lecture des informations et de suivi de piste sont également bien connus. On utilise généralement pour le suivi de piste, soit un second faisceau de lecture, soit le faisceau ayant servi à l'écriture; ou encore le même faisceau sert pour toutes les fonctions. L'interaction de ce faisceau avec les microreliefs défilant sous une tête de lecture crée des ordres d'interférences qui sont détectés par des moyens optoélectroniques de détection. La lecture peut se faire, soit par transmission au travers du disque et détection à l'aide de cellules photodétectrices placées à proximité de la face inférieure du disque, soit par reflexion du rayonnement sur le disque et retour inverse de la lumière reprise par des systèmes optiques comprenant des miroirs dirigeant les faisceaux réfléchis vers des cellules photodétectrices.

Outre le suivi radial, les cellules photodétectrices peuvent également être utilisées pour assurer une focalisation correcte du faisceau de lecture sur la face enregistrée. Enfin, ces cellules sont utilisées pour générer des signaux électriques représentant l'information enregistrée.

Pour les applications dans le domaine de l'informatique, il est nécessaire du pouvoir enregistrer des données de type numérique de façon aléatoire à un endroit quelconque du disque. De même, lors de la lecture, l'accès aléatoire à ces informations est également requis. Une autre exigeance soulevée par ce type de dispositif est que la lecture doit être synchronisée sur l'éctriture. Or pour de nombreuses raisons dûes à des phénomènes parasites tels que des fluctuations de vitesse, une horloge extérieure ne peut suffir à cette fin. Les signaux de synchronisation doivent donc être dérivés directement des données enregistrées de façon à avoir une corrélation entre les données lues et les données inscrites.

De façon pratique, les microreliefs se présentent sous forme d'altérations le long des pistes associés à deux niveaux bien définis et séparées par des transitions entre ces deux niveaux. Les zones interpistes sont des zones uniformes dont la surface est à l'un de ces niveaux. Les moyens de détection vont traduire ces variations de niveaux par une suite d'impulsions également présentant deux états qui peuvent être associées à des états logiques "0" et "1" et présentant des transitions plus ou moins brusques entre ces deux états.

Dans l'art connu, il est d'usage de dériver des signaux de synchronisation de l'apparition d'une de ces transitions, par exemple un front montant ou un front descendant.

Pour ce faire, on met classiquement en oeuvre des codes dits autosynchronisants ou du moins présentant un maximum de transitions, comme il a été rappelé.

Cependant lorsqu'on désire augmenter la densité d'enregistrement, il est d'usage d'utiliser d'autres types de codes comme, par exemple, le code dit N.R.Z. (non retour à zéro).

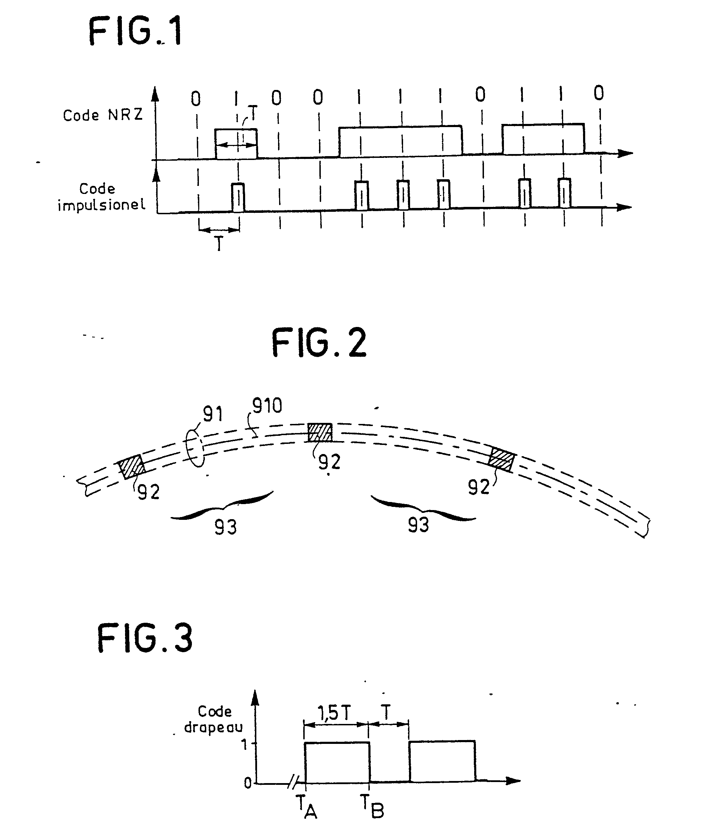

La figure 1 illustre deux types de codes: le code impulsionnel et le code N.R.Z., ce pour un mot binaire arbitraire multibit présentant les états logiques suivants:

01001110110.

On réalise immédiatement, au vu de la figure 1, que le code impulsionnel présente beaucoup plus de transitions que le code de type N.R.Z. Il est alors plus difficile de dériver de ce dernier des informations pour la synchronisation. Sur la figure, la période T représente la durée d'un signal binaire élémentaire ou bit qui correspond à une fréquence de rhytme f=1/T.

Il n'est pas non plus possible d'utiliser une piste annexe réservée à la synchronisation, ce qui détruirait de ce fait le gain en densité permit par le code N.R.Z.

Pour pallier les difficultés énoncées, l'invention a pour objet un procédé dont la caractéristique principale est de dériver les signaux nécessaires à la synchronisation de l'écriture et/ou la lecture de données numériques sur un support d'information optique, de données numériques spécifiques ou drapeaux, enregistrés sur la piste commune aux données numériques d'information, mais multiplexées spatialement avec celles-ci.

Ces drapeaux peuvent être inscrits préalablement à toute inscription d'informations utiles et sont alors utilisés pour la génération de signaux de synchronisation lors de l'inscription ultérieure de ces informations et lors des lectures successives; ou encore sont multiplexées en temps avec l'inscription de ces informations et sont utilisés lors de la lecture ultérieure de celles-ci.

La figure 2 illustre un exemple d'agencement conforme à l'invention. Sur cette figure a été représenté un tronçon d'une des pistes 91, d'un disque, d'axe moyen 910. Dans l'exemple considéré, il s'agit de pistes de configuration circulaire. Le long de ces pistes sont enregistrés des drapeaux 92 conformément à la caractéristique principale de l'invention.

Il est nécessaire que les données numériques spécifiques représentant ces drapeaux soient sélectivement identifiables de manière à ne générer des signaux de synchronisation uniquement en corrélation avec l'apparition de ces drapeaux spécifiques et au contraire qu'ils soient "transparent" pour les circuits de traitement des informations utiles.

Pour ce faire, si on utilise on code du type N.R.Z. comme représenté sur la partie supérieure de la figure 1, on enregistre des drapeaux spécifiques sous forme d'impulsions dont les intervalles de temps séparant des fronts de même nature sont interdits dans le code de modulation. Pour le code N.R.Z. les durées T et multiples entiers de T sont utilisées. On choisi pour les impulsions spécifiques enregistrées une durée égale à la plus petite durée, demi-entière utilisable c'est à dire 1,5 T.

Une telle impulsion est illustrée par le diagramme de la figure 3. Une première partie est au "1" logique pendant l'intervalle de temps égal à 1,5 T, intervalle de temps $T_A$—$T_B$ et au "0" logique pendant l'intervalle de temps égale à T: intervalle $T_B$—$T_C$.

On peut distinguer deux situations particulières. La première est le cas où le disque est prégravé, c'est à dire comporte les drapeaux, inscrits antérieurement à tout enregistrement de données numériques d'information utile. Dans une variante préférée, l'inscription de ces drapeaux le long des pistes est périodique et les espaces laissés libres entre les drapeaux définis sont des blocs ou des secteurs de données: on peut dans ce cas obtenir un mode de fonctionnement entièrement synchrone.

Le second cas est celui où les drapeaux sont inscrits en même temps que l'enregistrement des données numériques d'informations utiles. Comme précédemment, les drapeaux peuvent être inscrits en des sites spécifiques, régulièrement espacés ou non, ou encore être inscrits multiplexés avec les données numériques d'informations utiles.

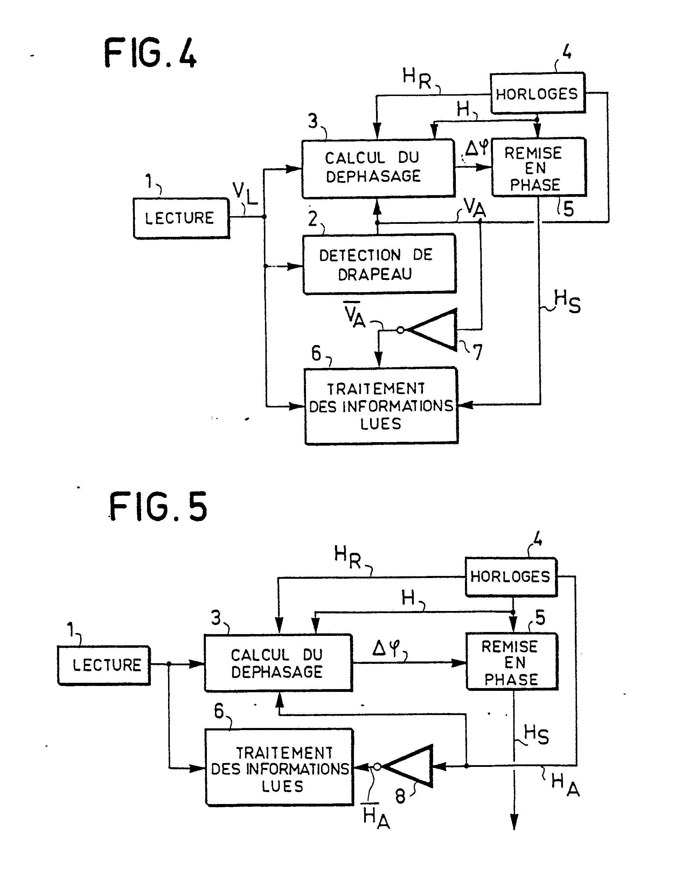

Le procédé de l'invention selon une variante préférée va maintenant être décrit de façon plus détaillé à l'aide du dispositif représenté par le diagramme synoptique de la figure 4. Des organes optoélectroniques de détection et les circuits électroniques associés 1 fournissent un signal de lecture $V_L$ transmis d'une part à des circuits classiques de traitement de l'information lue 6 et, d'autre part, aux circuits spécifiques de la présente invention.

Selon le procédé de l'invention, il est tout d'abord nécessaire de déterminer si les signaux $V_L$ sont issus de la lecture d'informations utiles ou au contraire de la lecture de drapeaux destinés à la synchronisation. Cette étape est réalisée à l'aide de circuits de détection de drapeaux 2 qui seront détaillés ultérieurement. Ces circuits fournissent un signal d'autorisation $V_A$ transmis à des circuits de calcul de déphasage 3. Ces circuits, selon la caractéristique fondamentale de l'invention, ont pour but de fournir des informations $\Delta\varphi$ représentatives de l'instant d'apparition d'une transition d'un sens déterminé du microrelief défilant sous la tache de lecture. Le signal d'autorisation $V_A$, par exemple après inversion logique $\overline{V}_A$ par l'inverseur 7, peut être utilisé à des fins d'inhibition-autorisation de fonctionnement des circutis de traitement des informations lues 6.

Le dispositif comporte également des circuits d'horloge 4 générant des impulsions de synchronisation H régénérées par des circuits 5, c'est à dire remis en phase et transmis sous forme d'un signal re-synchronisé $H_S$ aux circuits de traitement de l'information lue. Des circuits d'horloges fournissent également au circuit de calcul de déphasage 3 des signaux d'horloge de référence $H_R$ et les signaux H. De façon classique, ces circuits d'horloges comprennent un oscillateur piloté par quartz présentant une grande stabilité.

On admet que la vitesse relative support d'information-tête d'enregistrement ou lecture est définie avec suffisamment de précision suivant une loi reproductible: par exemple vitesse angulaire constant pour un disque.

Dans ce cas, pendant les phases de lecture, la fréquence et la phase des signaux de synchronisation $H_S$ sont générés à partir des informations de phase extraites des drapeaux détectés.

Dans une configuration de drapeaux périodiques, on régénère le rythme de bit, c'est à dire la fréquence de l'horloge H à partir du rythme de blocs, c'est à dire au rythme de la détection de drapeaux (passages successifs sous la tête de lecture). Pour ce faire, le signal $V_A$ est également transmis aux circuits d'horloge 4.

La remise en phase par les circuits 5 est effectuée à l'aide des informations $\Delta\varphi$ fournies par les circuits de détection de drapeaux 2.

Si, de plus, le rythme de bit des données numériques d'informations utiles lues est très stable, c'est à dire si le glissement de phase par bloc (entre deux passages de drapeaux) est inférieur à une fraction d'élément binaire (glissement en temps inférieur à une fraction déterminée de l'intervalle de temps T) l'opération de régénération de la fréquence n'est pas nécessaire.

Ceci peut être obtenu en asservissant la vitesse relative support-tête d'enregistrement et/ou lecture par des moyens qui sortent du cadre de la présente invention.

Dans ce cas, le dispositif de l'invention se réduit aux circuits simplifiés illustrés sur la figure 5. Il n'y a plus de circuits de détection de drapeaux (fig. 4:2), la position de ceux-ci étant connue. Les signaux d'autorisation-inhibition peuvent être dérivés des signaux d'horloge, respectivement $H_A$ et via l'inverseur 8: $\overline{H}_A$. Les autres circuits sont identiques à ceux de la figure 4 et ne seront pas décrits à nouveau.

Les différents circuits des dispositifs des figures 5 et/ou 4 vont maintenant être décrits de façon plus détaillée.

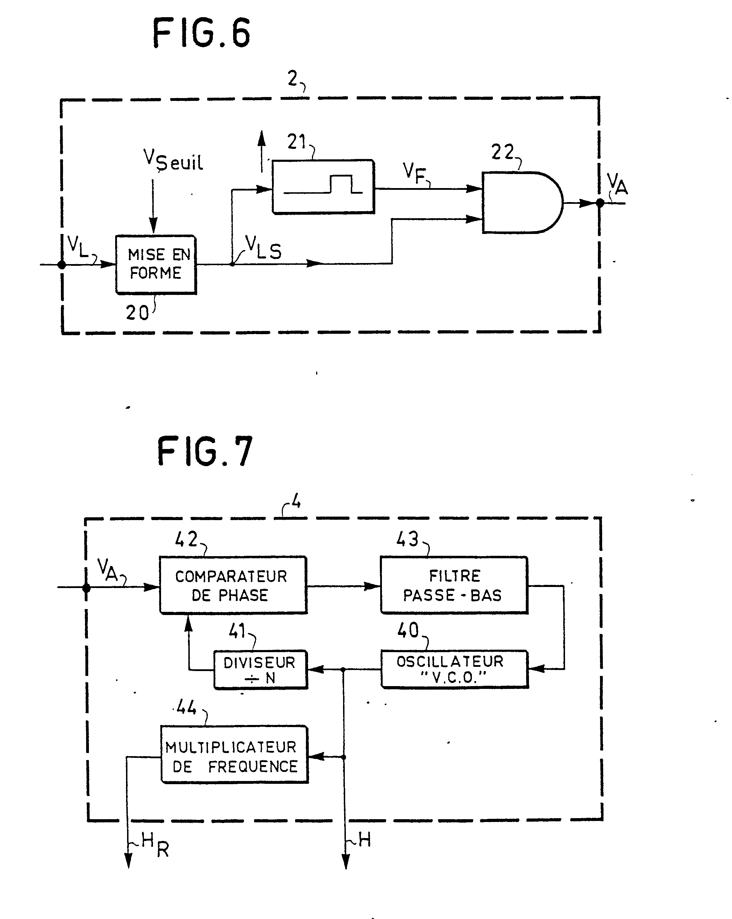

Un exemple de circuit de détection de drapeaux et de détermination de l'instant de passage d'un drapeau sous la tache de lecture est illustré par la figure 6. Ce circuit comprend un premier circuit 20 de mise en forme du signal lu $V_L$. Il peut être constitué de façon avantageuse par un élément bistable comparant un signal lu $V_L$ à une tension de seuil $V_{SEUIL}$ fournissant une impulsion $V_{LS}$, par exemple, à un état logique "1" lorsque le signal lu dépasse le seuil et à l'état "0" dans le cas contraire. Ce signal $V_{LS}$ est transmis à un circuit 21 destiné à générer un signal impulsionnel définissant une fenêtre de temps $V_F$.

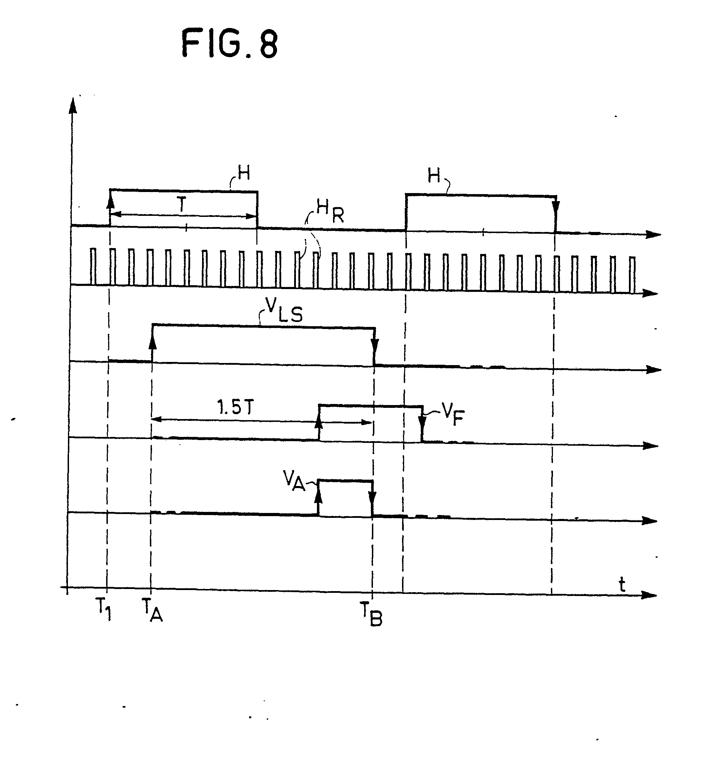

Ces signaux sont illustrés par le diagramme de la figure 8. La courbe H représente des impulsions fournies par les circuits d'horloge 4 de durée de base T. Le signal impulsionnel $V_{LS}$ peut présenter un déphasage par rapport aux signaux d'horloges quelconque modulo la période de ces signaux.

Le circuit 21 est déclenché par le font montant de la première impulsion de drapeau, à l'instant $T_A$ sur le diagramme, et délivre une impulsion $V_F$ dont le centre est retardé de 1,5 T. Pour ce faire on peut utiliser deux bascules monostables générants des impulsions de durées respectivement un peu supérieures et un peu inférieures à 1,5 T. L'intersection logique de ces deux impulsions peut être utilisée pour déterminer la fenêtre de temps $V_F$.

L'information de déphasage $\Delta\varphi$ peut s'obtenir par comparaison avec un instant déterminé de la période du signal d'horloge de base H, de manière numérique ou analogique. Le signal $\Delta\varphi$ produit par les circuits de calcul de déphasage peut se présenter sous la forme d'un signal impulsionnel présentant une transition d'un sens déterminé dont l'instant d'apparition est représentatif du déphasage du drapeau par rapport à un instant prédéterminé des signaux d'horloge H ou un mot binaire d'adresse définissant le déphasage.

Dans une variante de réalisation préférée, on utilise le signal d'horloge H et un signal d'horloge $H_R$ de fréquence multiple de la fréquence de répétition du signal d'horloge de base H et en relation de phase fixe avec ce signal. Le second signal d'horloge peut être dérivé de façon aisée du signal H à l'aide d'un multiplicateur de fréquence. A titre d'exemple, sur le diagramme de la figure 8, le signal d'horloge $H_R$ a une fréquence de répétition seize fois plus grande que celle du signal H. Il définit donc seize sous-intervalles. Un circuit décodeur peut fournir un mot binaire $\Delta\varphi$ représentant le décalage de l'instant $T_B$ par rapport à un instant de référence fixe de la période du signal d'horloge de base H, ce modulo seize. Le mot binaire $\Delta\varphi$ ou mot de commande sert à la remise en phase, à chaque passage de drapeau, du signal d'horloge utilisé comme signal de synchronisation $H_S$. Ce signal peut servir lors de la lecture de données numériques d'informations utiles entre les passages successifs de deux drapeaux, soit, lorsque ces drapeaux sont inscrits préalablement à l'enregistrement de données, sous forme de prégravures, également pour l'écriture de ces données.

Les nouveaux signaux d'horloge regénérés doivent être en relation de phase constante avec le passage des drapeaux, c'est à dire par exemple avec l'instant $T_B$ front descendant de l'impulsion de drapeau tel qu'il vient d'être déterminé. Les signaux de synchronisation $H_S$ ont même fréquence que les signaux d'horloge H et une relation de phase dépendant de la valeur du mot de commande $\Delta\varphi$.

Un exemple de réalisation des circuits d'horloge est représenté sur la figure 7. Ces circuits comprennent un oscillateur classique piloté par quartz, du type contrôlé par la tension ("V.C.O.") muni d'une boucle de retroaction à verrouillage de phase ("P.L.L.") comportant en série un diviseur 41 de fréquence par un nombre déterminé N, un comparateur de phase 42 recevant sur une première entrée la sortie du diviseur 41 et sur une seconde entrée les signaux $V_A$ issus du détecteur de drapeau 2 et un filtre passe-bas 43. La fréquence de sortie H de l'oscillateur est asservie sur un multiple N du rythme de passage des drapeaux sous la tache de lecture.

L'oscillateur qui vient d'être décrit s'applique plus particulièrement aux circuits illustrés par la figure 4. Lorsque les circuits de la figure 5 sont mis en oeuvre l'oscillateur peut être réduit à sa plus simple expression, la comparaison de phase n'étant plus nécessaire.

Enfin, un signal d'horloge $H_r$ de fréquence multiple du signal d'horloge de base H peut être généré à partir de ce dernier à l'aide d'un multiplicateur de fréquence 44.

Les circuits de remise en phase 5 peuvent comprendre également un oscillateur commandé en tension muni d'une boucle à verrouillage de phase du type de celui qui vient d'être décrit piloté en fréquence par les signaux d'horloge H ou une ligne à retard programmable. Le recalage en phase sur les drapeaux est fait à l'aide du signal de commande $\Delta \varphi$.

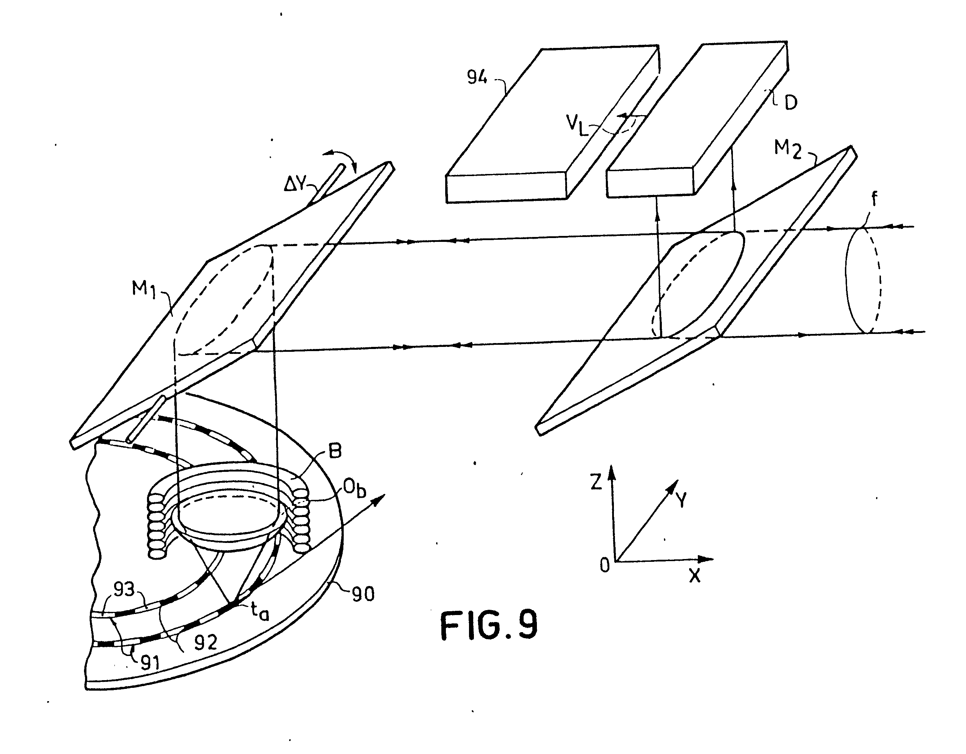

La présente invention peut être mise en oeuvre dans de nombreux appareils écriture-lecture par voie optique de support d'information et à titre d'exemple la figure 9 illustre de façon schématique, un appareil d'enregistrement-lecture sur un support par voie optique dans lequel le procédé de la présente invention peut être mis en oeuvre. Un disque 90 tournant dans un plan XOY autour d'un axe parallèle au troisième axe Z du trièdre de référence XYZ comporte sur sa face supérieure une couche de matériau thermo-sensible dans laquelle des informations ont été enregistrées le long des pistes 91. Ces pistes comportent également des drapeaux 92 associés à un code spécifique conformément à ce qui a été décrit. Les données numériques d'informations utiles sont enregistrées entre ces drapeaux dans des zones 93, de préférence de longueur constante. Le disque, d'un diamètre d'environ 30 cm, est animé d'un mouvement de rotation communiqué par un moteur d'entrainement solidaire du chassis du système optique d'enregistrement-lecture. De façon typique, les pistes au nombre par exemple de 40 000 sont inscrites à l'intérieur d'une couronne centrée sur l'axe de rotation et de largeur égale à environ 8 cm. Le nombre de drapeaux inscrits par pistes circulaires concentriques doit être suffisant pour s'affranchir de phénomènes parasites liés à la nature du support ou à la fluctuation de la vitesse de rotation. Typiquement on inscrit 3 500 drapeaux par pistes, compte-tenu des données précédentes.

Dans l'exemple de réalisation illustré par la figure 9, le dispositif d'accès à une piste prédéterminée du disque comprend une partie fixe comportant une source d'énergie (non-représentée) générant un faisceau de rayons parallèles f et une partie mobile constituée par la tête d'enregistrement-lecture proprement dite. Comme il est connu, cette dernière comprend un objectif du type microscope $O_b$, solidaire d'une bobine électromagnétique B se déplaçant dans le champ magnétique d'un aimant permanent (non-représenté) assurant l'asservissement vertical ou focalisation et un miroir galvanométrique $M_1$ assurant l'asservissement radial. Le miroir galvanométrique $M_1$ est mobile autour d'un axe $\Delta_Y$ parallèle à l'axe OY du trièdre de référence de manière à assurer ledit asservissement radial. Le faisceau f est focalisé en une tache $t_a$ en un endroit déterminé du disque sur une des pistes 91 précitées. On suppose ici que le système est du type monofaisceau-monopiste, c'est à dire un système dans lequel le faisceau unique f sert alternativement à l'écriture et à la lecture ainsi que pour assurer les fonctions de suivi radial de piste et de focalisation. Cet aspect sort du cadre de l'invention.

Pour détecter le faisceau de lecture réfléchi par le disque, on interpose, par exemple, une lame semi-transparente $M_2$ sur le trajet du faisceau unique f. Le faisceau réfléchi par le disque est alors détecté par des moyens photodétecteurs D qui génèrent le signal $V_L$ à des circuits 94 de traitement de ce signal. Ces circuits comprennent notamment des circuits propres à l'invention, par exemple le dispositif décrit en relation avec la figure 7.

L'invention est également compatible avec les appareils d'enregistrement-lecture mettant en oeuvre plus d'un faisceau par exemple un faisceau de lecture et un faisceau d'écriture.

En résumé, le procédé de l'invention permet, entre autres avantages, de tirer partie de l'indépendance qui existe entre le codage des données numériques représentant l'information et la synchronisation ainsi qu'une moins grande dépendance vis à vis des pertes d'informations dues à des "blancs" en lecture plus connus sous la dénomination anglo-saxonne de "dropouts".

**Revendications**

1. Procédé de génération de signaux de synchronisation ($H_s$) dans un appareil de transcription optique de données numériques sur un support (90) animé d'un mouvement d'exploration; lesdites données étant enregistrées sous forme de perturbations (92) d'au moins une couche de matériau du support, optiquement détectables le long de pistes (91) de configuration déterminée; lesdites pistes comportant une succession de sites non-contigus dédiés au stockage desdites données entre lesquels sont intercalés des sites dédiés à un autre usage; ledit appareil comportant des moyens pour focaliser en une tache d'exploration ($t_a$), au moins un faisceau (f) d'énergie lumineuse sur une desdites pistes, des moyens optoélectroniques (1) de détection de l'interaction de ce faisceau avec lesdites perturbations défilant sous la tache d'exploration et des moyens sélecteurs (2) reliés à ces moyens optoélectriques pour délivrer un signal caractéristique du contenu desdits sites intercalaires; procédé caractérisé en ce qu'il comprend les étapes suivantes:

—inscription exclusivement dans lesdits sites intercalaires de données numériques spécifiques (92) sous forme d'une suite de perturbations de ladite couche de matériau produisant des transitions jouant le rôle de référence par rapport auxdits signaux de synchronisation mais dont les écarts sont discernables de ceux mis en oeuvre pour la transcription desdites données numériques;

— génération locale d'un à l'extérieur du support signal périodique d'horloge (H) comportant un élément définissant un instant de référence à mettre en rapport avec la transcription desdites données;

— identification sélective des données numériques spécifiques par lesdits moyens sélecteurs (2);

— détermination par lesdits moyens sélecteurs de l'instant de référence ($T_B$) issu de l'exploitation d'une transition dont la sélection est commandée avec un retard déterminé par rapport à une autre transition; ladite transition et l'autre transition étant produites par la même perturbation inclue dans lesdites données numériques spécifiques (92) en réponse à l'exploration par ladite tache (ta) desdits sites intercalaires; ledit retard dépendant de la durée estimée existant entre les deux transitions.

— détermination du décalage de cet instant de référence ($T_B$) avec l'instant de référence propre audit signal périodique d'horloge (H);

— et génération dudit signal de synchronisation ($H_S$) à partir dudit signal périodique d'horloge (H) corrigé dudit décalage.

2. Procédé selon la revendication 1, caractérisé en ce que les données numériques faisant l'objet de ladite transcription génèrent des transitions dont les écarts sont caractéristiques du code de modulation utilisé; lesdites données numériques spécifiques étant composées de perturbations qui génèrent un jeu de transitions ayant par rapport à ces écarts caractéristiques la propriété exclusive d'être identifiables par lesdits moyens sélecteurs (2).

3. Procédé selon la revendication 2, caractérisé en ce que ledit code de modulation ayant des écarts de durée T et multiples entiers de T, ledit jeu de transitions comporte des intervalles de temps entre fronts composés d'une durée demi entière T/2 et d'au moins une durée entière T; lesdits fronts de même nature étant interdits dans ledit code de modulation.

4. Procédé selon l'une quelconque des revendications 1 à 3, caractérisé en ce que l'étape de détermination de l'instant de référence d'un site intercalaire dans la tache d'exploration est réalisée par détection de l'instant ($T_B$) d'apparition d'une transition d'un sens prédéterminé d'une des impulsions des données numériques spécifiques.

5. Procédé selon la revendication 3, caractérisé en ce que l'étape d'identification et de détermination de l'instant de référence sont confondus en une étape unique et en ce qu'il est généré une fenêtre de temps ($V_F$) initialisée par la première transition d'un premier sens d'une des impulsions des données numériques spécifiques et retardée d'un intervalle de temps égal à une fois et demi ladite valeur élémentaire déterminée T, et réalisée l'intersection logique de cette fenêtre de temps avec lesdites impulsions pour générer conditionnellement une impulsion ($V_A$) permettant de déterminer ledit instant de passage ($T_B$.

6. Procédé selon l'une quelconque des revendications 1 à 5, caractérisé en ce que l'inscription pendant la phase préliminaire des données numériques spécifiques s'effectue préalablement à l'inscription de toutes données numériques d'information sur ledit support et en ce que lesdits signaux de synchronisation ($H_S$) sont utilisés dans des phases ultérieures, pour l'écriture et la lecture synchronisées de ces données numériques d'information.

7. Procédé selon l'une quelconque des revendications 1 à 6, caractérisé en ce que lesdites données numériques spécifiques sont inscrites en des sites (92) régulièrement espacés le long des pistes (91) définissant entre ces sites des blocs (93) réservés à l'inscription des données numériques d'information.

8. Dispositif de génération de signaux de synchronisation pour appareil de transcription optique de données numériques sur un support (90) animé d'un mouvement d'exploration; lesdites données étant enregistrées sous forme de perturbations (92) d'au moins une couche de matériau du support optiquement détectables le long de pistes (91) de configuration déterminée; lesdites pistes comportant une succession de sites non-contigus dédiés au stockage desdites données entre lesquels sont intercalés des sites dédiés à un autre usage; dispositif comprenant des moyens sélecteurs reliés à des moyens optoélectriques détectant l'interaction optique produite lors du défilement de l'une desdites pistes par rapport à un spot d'exploration optique; lesdits moyens sélecteurs délivrant un signal caractéristique du contenu desdits sites intercalaires qui exerce une action sur des moyens de recalage (5) délivrant lesdits signaux de synchronisation, caractérisé en ce qu'il comprend des moyens (4) de génération locale à l'extérieur du support, de signaux de référence et de signaux d'horloge périodiques reliés auxdits moyens de recalage (5) et à une première entrée de moyens de calcul de déphasage (3); lesdits moyens de calcul de déphasage recevant sur une seconde entrée un signal de référence émis par lesdits moyens sélecteurs (2) à chaque identification d'un site intercalaire et produisant une information de déphasage correspondant au déphasage des signaux de référence provenant des moyens (4) de génération locale de signaux d'horloge périodique et des moyens sélecteurs (2); ladite information de déphasage étant prise en compte par lesdits moyens de recalage, afin que lesdits signaux de synchronisation permettent l'écriture ou la lecture en ordre chronologique des données numériques dont la transcription est abordée après l'identification dudit site intercalaire par les transitions spécifiques qu'il renferme.

9. Dispositif selon la revendication 8, caractérisé en ce que les données numériques spécifiques comprenant au moins deux transitions dont l'interdistance est interdite dans le code de modulation des données numériques, lesdits moyens sélecteurs (2) comprennent un détecteur desdites transitions recevant les signaux de sortie (V$_L$) desdits moyens photoélectriques et comportant un générateur (21) de fenêtre de temps (V$_F$) initialisée par la première reçue desdites transitions; ladite fenêtre de temps (V$_F$) comportant deux transitions spécifiquement retardées pour encadrer et isoler la seconde reçue desdites transitions; l'extraction de ladite transition isolée étant accompli par une porte logique à coïncidence (22) qui fournit l'une des références de temps nécessaire aux moyens de calcul de déphasage (3).

10. Dispositif selon l'une quelconque des revendications 8 et 9, caractérisé en ce que le site intercalaire renfermant lesdites données numériques spécifiques comporte au moins deux impulsions dont les transitions de même nature sont interdites dans le code de modulation des données numériques.

11. Dispositif selon l'une quelconque des revendications 8 à 10, caractérisé en ce que les moyens (4) de génération locale de signaux de référence et de signaux d'horloge périodiques comprennent un oscillateur du type contrôlé par la tension (V.C.O.) munie d'une boucle à verouillage de phase (P.L.L.), afin d'asservir sa fréquence sur un multiple du rythme du signal d'identification émis par lesdits moyens sélecteurs (2).

12. Procédé selon l'une quelconque des revendications 1 à 7, caractérisé en ce qu'il comporte l'étape supplémentaire consistant à recaler en fréquence ledit signal périodique d'horloge (H) d'après la fréquence d'apparition de l'instant de référence (T$_B$).

13. Support d'information destiné à la mise en oeuvre du procédé selon l'une quelconque des revendications 1 à 7 et 12, du type comprenant dans une surface de référence un ensemble de pistes adjacentes le long desquelles sont prévus uns succession de sites non contigus dédiés au stockage de données numériques, entre lesquels sont intercalés des sites comportant des données numériques spécifiques et dédiés à un autre usage caractérisé en ce que la transcription des données numériques de et vers ledit support est ordonnée par un signal de synchronisation périodique exclusivement transcrit par un sous multiple de sa fréquence propre au moyen desdits sites intercalaires, lesquels contiennent une suite de perturbations optiquement détectables produisant des transitions jouant le rôle de référence par rapport audit signal de synchronisation périodique, mais dont les écarts sont discernables de ceux mis en oeuvre par la transcription desdites données numériques.

14. Support selon la revendication 13, caractérisé en ce que les données numériques faisant l'objet de ladite transcription génèrent des transitions dont les écarts sont caractéristiques du code de modulation utilisée; ledit code de modulation ayant des écarts de durée T et multiples entiers de T; le jeu de transitions contenu dans lesdits sites intercalaires comportant des intervalles de temps entre fronts composés d'une durée demi entière T/2 et d'au moins une durée entière T; lesdits fronts de même nature étant interdit dans ledit code de modulation.

15. Support selon l'une quelconque des revendications 13 et 14, caractérisé en ce que la transcription desdites données numériques spécifiques dans lesdits sites intercalaires constitué un préalable à toute transcription de données numériques dans les sites dédiés à cette transcription.

16. Support selon l'une quelconque des revendications 13 à 15, caractérisé en ce que les sites intercalaires sont régulièrement espacés le long desdites pistes.

17. Support selon l'une quelconque des revendications 13 à 16, caractérisé en ce que chaque site intercalaire comporte au moins deux impulsions.

18. Support selon l'une quelconque des revendications 13 à 17, caractérisé en ce que les sites intercalaires sont prégravés et en ce que les données numériques sont transcrites dans une structure sensible thermooptique comportant au moins une couche enregistrable laissant apparaitre la prégravure desdits sites intercalaires.

**Patentansprüche**

1. Verfahren zum Erzeugen von Synchronisationssignalen (HS) in einem Gerät für die optische Überschreibung digitaler Daten auf einen eine Explorationsbewegung ausführenden Träger (90), wobei die genannten Daten als Störungen (92) von wenigstens einer Trägermaterialschicht gespeichert werden, die optisch entlang Spuren (91) bestimmter Konfiguration detektiert werden können, wobei die genannten Spuren eine Folge von nicht zusammenhängenden, zur Speicherung dieser Daten bestimmten Orten umfassen, zwischen denen Orte liegen, welche für eine andere Benutzung bestimmt sind, wobei das genannte Gerät Mittel zur Fokussierung wenigstens eines Bündels (4) aus Lichtenergie zu einem Abtastfleck (t$_a$) auf einer der gennanten Spuren, optoelektronische Mittel (1) zur Detektion der Wechselwirkung zwischen diesem Bündel und den genannten Störungen, welche unter dem Abtastfleck vorbeilaufen, sowie Selektionsmittel (2) umfaßt, welche mit diesen optoelektrischen Mitteln verbunden sind, um ein für den Inhalt der genannten Zwischenorte charakteristisches Signal abzugeben, wobei dieses Verfahren durch die folgenden Schritte gekennzeichnet ist:

—Einschreiben von spezifischen Daten (92) in Form einer Folge von Störungen der genannten Materialschicht ausschließlich in den genannten Zwischenorten, wobei diese Störungen Übergänge verursachen, welche die Funktion einer Referenz in Bezug auf die genannten Synchronisationssignale erfüllen, deren Abstände aber von denjenigen, die für die Überschreibung der genannten digitalen Daten verwendet werden, unterscheidbar sind;

—Lokales, außerhalb des Trägers erfolgendes Erzeugen eines periodischen Taktsignals (H) mit einem Element, das einen Referenzzeitpunkt (TAKT) definiert, der mit der Überschreibung der genannten Daten in Beziehung zu setzen ist;

—Selektive Identifizierung der spezifischen digitalen Daten durch die genannten Selektionsmittel (2);

—Durch die genannten Selektionsmittel erfolgende Bestimmung des Referenzzeitpunktes (T_B), welcher aus der Auswertung eines Überganges stammt, dessen Selektion mit einer in Bezug auf einen anderen Übergang bestimmten Verzögerung gesteuert ist; wobei der genannte Übergang sowie der andere Übergang durch dieselbe Störung erzeugt werden, die in den genannten spezifischen digitalen Daten (92) enthalten ist, ansprechend auf die von dem genannten Fleck (t_a) durchgeführte Abtastung der genannten Zwischenorte enthalten ist, wobei die genannte Verzögerung von der geschätzten Zeitspanne, welche zwischen diesen beiden Übergängen gegeben ist, abhängig ist;

—Bestimmung der Verschiebung dieses Referenzzeitpunktes (T_B) gegenüber dem Referenzzeitpunkt, der zu dem periodischen Taktsignal (H) gehört; und

—Erzeugen des genannten Synchronisationssignal (H_s) aus dem periodischen Taktsignal (H), das mit dieser Verschiebung korrigiert ist.

2. Verfahren nach Anspruch 1, dadurch gekennzeichnet, daß die digitalen Daten, die den Gegenstand der Überschreibung bilden, Übergänge erzeugen, deren Abstände für den verwendeten Modulationscode charakteristisch sind, wobei die genannten spezifischen digitalen Daten aus Störungen gebildet sind, welche eine Gruppe von Störungen erzeugen, die in Bezug auf diese charakteristischen Abstände die auschließliche Eigenschaft aufweisen, durch die genannten Selektionsmittel (2) identifizierbar zu werden.

3. Verfahren nach Anspruch 2, dadurch gekennzeichnet, daß der genannte Modulationscode Abstände der Dauer T und eines ganzzahligen Vielfachen von T aufweist, wobei die genannte Gruppe von Übergängen Flanken umfaßt, welche aus einer ganzen halben Dauer T/2 und wenigstens einer ganzen Dauer T zusammengesetzt sind; wobei die gleichartigen Flanken in dem genannten Modulationscode verboten sind.

4. Verfahren nach einem der Ansprüche 1 bis 3, dadurch gekennzeichnet, daß der Schritt zur Bestimmung des Referenzzeitpunktes eines Zwischenortes in dem Abtastfleck durch Detektion des Erscheinungszeitpunktes (T_B) eines Überganges mit einer vorbestimmten Richtung einer der Impulse der spezifischen digitalen Daten verwirklicht wird.

5. Verfahren nach Anspruch 3, dadurch gekennzeichnet, daß der Schritt zur Identifizierung und zur Bestimmung des Referenzzeitpunktes in einen einzigen Schritt verschmelzen und daß ein Zeitfenster (V_F) erzeugt wird, welches durch den ersten Übergang einer ersten Richtung eines der Impulse der spezifischen digitalen Daten initialisiert wird und um ein Zeitintervall verzögert wird, welches das Eineinhalbfache des genannten bestimmten Elementarwerts T beträgt, und daß die logische Überschneidung dieses Zeitfensters mit den genannten Impulsen gebildet wird, um einen Impuls (V_A) bedingt zu erzeugen, der die Bestimmung des genannten Durchgangzeitpunkts (T_B) ermöglicht.

6. Verfahren nach einem der Ansprüche 1 bis 5, dadurch gekennzeichnet, daß die während der Vorbereitungsphase erfolgende Einschreibung der spezifischen digitalen Daten vor der Einschreibung aller digitalen Informationsdaten auf dem genannten Träger erfolgt, und daß die genannten Synchronisationssignale (H_s) in späteren Schritten für das synchronisierte Einschreiben und Auslesen dieser digitalen Informationsdaten verwendet werden.

7. Verfahren nach einem der Ansprüche 1 bis 6, dadurch gekennzeichnet, daß die genannten spezifischen digitalen Daten in Orten (92) eingeschrieben werden, welche entlang der Spuren (91) gleichmäßig beabstandet sind, welche zwischen diesen Orten Blöcke (93) definieren, die für das Einschreiben der digitalen Informationsdaten reserviert sind.

8. Vorrichtung zum Erzeugen von Synchronisationssignalen für ein Gerät zur optischen Überschreibung von digitalen Daten auf einen eine Explorationsbewegung ausführenden Träger (90); wobei die genannten Daten in Form von Störungen (92) von wenigstens einer Materialschicht des Trägers gespeichert sind, welche entlang von Spuren (91) bestimmter Konfiguration optisch detektierbar sind, wobei die genannten Spuren eine Folge von nicht zusammenhängenden, für die Speicherung der genannten Daten bestimmten Orten umfassen, zwischen welchen Orte, die für eine andere Benutzung bestimmt sind, eingefügt sind, wobei diese Vorrichtung Selektionsmittel umfaßt, welche mit optoelektrischen Mitteln verbunden sind, die die während des Vorbeilaufens einer der genannten Spuren in Bezug auf einen optischen Abtastfleck erzeugte optische Wechselwirkung detektieren, wobei die genannten Selektionsmittel ein für den Inhalt der genannten Zwischenorte charakteristiches Signal abgeben, welches auf die genannten Synchronisationssignale abgebende Neueinstellmittel (5) einwirkt, dadurch gekennzeichnet, daß sie Mittel (4) zum lokalen, außerhalb des Trägers erfolgenden Erzeugen von Referenzsignalen sowie von periodischen Taktsignalen umfaßt, welche mit den genannten Neueinstellmitteln (5) sowie mit einem ersten Eingang von Mitteln zur Berechnung der Phasenverschiebung (3) verbunden sind; wobei die genannten Mittel zur Berechnung der Phasenverschiebung auf einem zweiten Eingang ein Referenzsignal empfangen, das durch die genannten Selektionsmittel (2) bei jeder Identifizierung eines Zwischenortes abgegeben wird und das eine Phsenverschiebungsinformation erzeugt, welche der Phasenverschiebung der Referenzsignale entspricht, die aus den Mitteln (4) zum lokalen Erzeugen von Signalen mit periodischem Takt und aus den Selektionsmitteln (2) stammen, wobei die genannte Phasenverschiebungsinformation durch die genannten Neueinstellmittel berücksichtigt wird, damit die genannten Synchronisationssignale das chronologische Einschreiben bzw. das Auslesen der digitalen Daten ermöglichen, deren Überschreibung nach der Identifizierung des genannten Zwischenortes durch die in ihm enthaltenen spezifischen Übergänge vorgenommen wird.

9. Vorrichtung nach Anspruch 8, dadurch gekennzeichnet, daß die spezifischen digitalen Daten, welche wenigstens zwei Übergänge umfassen, deren Zwischenabstand in dem Modulationscode der digitalen Daten verboten ist, und daß die Selektionsmittel (2) einen Detektor für die Übergänge umfassen, der die Ausgangssignale $(V_L)$ der genannten photoelektrischen Mittel empfängt und der einen Generator (21) für ein Zeitfenster $(V_F)$ umfaßt, das durch den ersten empfangenen Übergang initialisiert wird; wobei das genannte Zeitfenster $(V_F)$ zwei spezifisch verzögerten Übergänge umfaßt, um den zweiten empfangenen Übergang einzurahmen und zu isolieren: wobei die Extraktion des genannten isolierten Übergangs über eine Koinzidenz-Logikschaltung (22) verwirklicht wird, welche eine der für die Mittel (3) zur Berechnung der Phasenverschiebung notwendigen Zeitreferenzen liefert.

10. Vorrichtung nach einem der Ansprüche 8 und 9, dadurch gekennzeichnet, daß der die genannten spezifischen digitalen Daten enthaltende Zwischenort wenigstens zwei Impulse umfaßt, deren gleichartige Übergänge in dem Modulationscode der digitalen Daten verboten sind.

11. Vorrichtung nach einem der Ansprüche 8 bis 10, dadurch gekennzeichnet, daß die Mittel (4) zum lokalen Erzeugen von Referenzsignalen sowie von periodischen Taktsignalen einen Oszilator vom Typ mit Steuerung durch die Spannung (VCO) umfassen, die mit einer Phasenverriegelungschleife (PLL) versehen ist, um seine Frequenz auf ein Vielfaches des Rhythmus des Identifizierungssignals nachzuregeln, das von den genannten Selektionsmittel (2) abgegeben wird.

12. Verfahren nach einem der Ansprüche 1 bis 7, dadurch gekennzeichnet, daß es den zusätzlichen Schritt umfaßt, der darin besteht, das genannte periodische Taktsignal (H) in der Frequenz in Abhängigkeit von der Erscheinungsfrequenz des Referenzzeitpunktes $(T_B)$ zu verschieben.

13. Informationsträger für der Ausübung des Verfahrens nach einem der Ansprüche 1 bis 7 und 12, vom Typ mit eine Gruppe von zusammenhängenden Spuren in einer Referenzoberfläche, entlang welchen eine Folge von nicht zusammenhängenden Orten vorgesehen ist, die für die Speicherung digitaler Daten bestimmt sind und zwischen welchen Orte eingefügt werden, die spezifische digitale Daten umfassen und für eine andere Verwendung bestimmt sind, dadurch gekennzeichnet, daß die Überschreibung der digitalen Daten aus und zu diesem Träger durch ein periodisches Synchronisationssignal bestimmt wird, das durch einen gemeinsamen Teiler seiner Eigenfrequenz mittels der Zwischenorte ausschließlich überschrieben wird, welche eine Folge von optisch detektierbaren Störungen enthalten, die Übergänge erzeugen, welche in Bezug auf das periodische Synchronisationssignal die Funktion einer Referenz erfüllen, deren Abstände aber von denjenigen, die für die Überschreibung der genannten digitalen Daten verwendet werden, unterscheidbar sind.

14. Träger nach Anspruch 13, dadurch gekennzeichnet, daß die digitalen Daten, welche den Gegenstand der genannten überschreibung bilden, Übergänge erzeugen, deren Abstände für den verwendeten Modulationscode charakteristisch sind; wobei der genannte Modulationscode Abstände mit einer Dauer T und ganzzahliger Vielfacher von T aufweist, wobei die Gruppe der Übergänge, die in den genannten Zwischenorten enthalten ist, Zeitintervalle zwischen Flanken aufweist, die zusammengesetzt sind aus einer ganzen halben Dauer T/2 und aus wenigstens einer ganzen Dauer T; wobei ferner die gleichartigen Flanken in dem Modulationscode verboten sind.

15. Träger nach einem der Ansprüche 13 und 14, dadurch gekennzeichnet, daß die Überschreibung der genannten spezifischen digitalen Daten in die genannten Zwischenorte eine Vormaßnahme für jede Überschreibung von digitalen Daten in die für die Überschreibung bestimmten Orte bildet.

16. Träger nach einem der Ansprüche 13 bis 15, dadurch gekennzeichnet, daß die Zwischenorte entlang der genannten Spuren gleichmäßig voneinander beabstandet sind.

17. Träger nach einem der Ansprüche 13 bis 16, dadurch gekennzeichnet, daß jeder Zwischenort wenigstens zwei Impulse umfaßt.

18. Träger nach einem der Ansprüche 13 bis 17, dadurch gekennzeichnet, daß die Zwischenorte vorgraviert sind und daß die digitalen Daten in eine thermooptisch empfindliche Struktur überschrieben werden, welche wenigstens eine speicherfähige Schicht umfaßt, die die Vorgravur der genannten Zwischenorte erscheinen läßt.

**Claims**

1. A method of generating sync signals $(H_S)$ in an apparatus for the optical transcription of digital data onto a substrate (90) performing an exploratory motion; said data being recorded in the form of perturbations (92) in at least one layer of material of the substrate and able to be optically detected along tracks (91) of a given configuration, the said tracks comprising a succession of noncontiguous sites intended for storing the said data between which there are placed interstitial sites intended for another form of use the said device comprising means for focusing at an exploration spot $(t_a)$, at least one beam (f) of light energy on the one of the said tracks, optoelectronic means (1) for the detection of the interaction of this beam with the said perturbations moving past under the exploration spot and selector means (2) connected with these optoelectronic means in order to provide a signal which is characteristic of the content of the said interstitial sites, said method being characterized in that it comprises the following stages:

—the writing exclusively in the said interstitial sites of specific digital data (92) in the form of a sequence of perturbations of the said layer of material producing transitions playing a reference part in relation to the said sync signals but whose differences are able to be seen from those used for the transcription of the said digital data;

—the local generation of a signal, external of the substrate, such signal being a periodic clock signal (H) comprising an element defining a reference instant to be placed in relation to the transcription of the said data;

—the selective identification of specific digital data by the said selector means (2);

—determination by the said selector means of the reference instant ($T_B$) resulting from the exploration of a transition whose selection is brought about with a given delay in relation to another transition; the said transition and the other transition being produced, at least one of them, by the same perturbation included in the said specific digital data (92) in response to the exploration by the said spot (ta) of the said interstitial sites; the said delay being dependent on the estimated duration existing between these two transitions;

—determination of the offset of this reference instant ($T_B$) with respect to the true reference instant of the said periodic clock signal (H); and

—the generation of the said sync signal ($H_s$) starting from the said periodic clock signal (H) corrected by the said offset.

2. The method as claimed in claim 1, characterized in that the digital data subjected to the said recording generate transitions whose separations are characteristic for the modulation code utilized; the said specific digital data being composed of perturbations which generate a set of transitions having, in relation to these characteristic separations, the exclusive property of being identifiable by the said selector means (2).

3. The method as claimed in claim 2, characterized in that, the said modulation code having separations of a duration T and entire multiples thereof, the said set of transitions comprises intervals of time between flanks composed of half a complete duration T/2 and at least one entire duration T; the said flanks of the same nature being forbidden in the said modulation code.

4. The method as claimed in any one of the claims 1 through 3, characterized in that the stage of determining the reference instance of a said interstitial site in the exploratory spot is effected by the detection of the instant ($T_B$) of the appearance of a transition of a predetermined direction of one of the pulses of the specific digital data.

5. The method as claimed in claim 3, characterized in that the stage of identification and of determination of the reference instant are merged in a single stage and in that a time window ($V_F$) is generated initialized by the first transition in a first direction of one of the specific digital data pulses and delayed by one time interval equal to one and a half times the said determined elementary value T, and the logic intersection is effected of this time window with the said pulses in order to conditionally generate a pulse ($V_A$) making it possible to determine the said passage instant ($T_B$).

6. The method as claimed in any one of the claims 1 through 5, characterized in that writing during the preliminary phase of specific digital data is effected prior to the writing all the digital information data on the said substrate and in that the said sync signals ($H_s$) are utilized in the later phases for the writing and reading of these digital information data.

7. The method as claimed in any one of the claims 1 through 6, characterized in that the said specific digital data are written at sites (92) which are regularly spaced along the tracks (91) which between them define these sites of blocks (93) reserved for the writing of the digital information data.

8. A device for the generation of sync signals for an apparatus for the optical transcription of digital data on a substrate (90) caused to perform an exploratory motion; the said data being recorded in the form of perturbations (92) of at least one layer of material able to be optically detected along tracks (91) of a predetermined configuration; the said tracks comprising a succession of noncontiguous sites intended for the storage of the said data between there are interstitial sites intended for another purpose; said device comprising selector means connected with optoelectronic means detecting the optical interaction produced at the time of motion of one of the said tracks past an optical exploratory spot, the said selector means supplying a signal characteristic of the content of the said interstitial sites which exerts an action on setting means (5) supplying said sync signals, characterized in that it comprises means (4) for the local generation outside the substrate of reference signals and periodic clock signals connected with the said setting means (5) and with a first input of the dephasing computing means (3); the said dephasing computing means receiving via a second input a reference signal provided by the said selector means (2) upon each identification of an interstitial site and producing dephasing information corresponding to the dephasing of the reference signals originating from the means (4) for the local generation of periodic clock signals and selector means (2); the said dephasing information being taken into account by the said setting means so that the said sync signals permit the writing or the reading in a chronological order of the digital data whose transcription is commenced after the identification of the said interstitial site by the specific transitions contained by it.

9. The device as claimed in claim 8, characterized in that the specific digital data comprise at least two transitions whose distance apart is forbidden in the modulation code of the digital data, the said selector means (2) comprising a detector for said transitions receiving output signals ($V_L$) of the said photoelectric means and comprising a time window ($V_F$) generator (21) initialized by the said first of said transitions to be received; the said time window ($V_F$) comprising two specifically retarded transitions in order to frame in and isolate the second of the said transitions received; the extraction of the said isolated transition being performed by a logical coincidence gate (22) which furnishes one of the time references needed for the dephasing computing means (3).

10. The device as claimed in any one of the claims 8 and 9, characterized in that the interstitial site containing the said specific digital data comprises at least two pulses whose transitions of the same nature are forbidden in the modulation code of the digital data.

11. The device as claimed in any one of the claims 8 through 10, characterized in that the means (4) for the local generation of reference signals and periodic clock signals comprise a voltage controlled oscillator (V.C.O.) provided with a phase locked loop (P.L.L.) in order to lock its frequency to a multiple of the rhythm of the identification signal provided by the said selector means (2).

12. The method as claimed in any one of the claims 1 through 7, characterized in that it comprises a supplementary stage consisting in setting the frequency of the said periodic clock signal (H) in accordance with the rate of appearance of the reference instant ($T_B$).

13. An information carrying substrate intended for use in the method as claimed in any one of the claims 1 through 7 and 12, of the type comprising an array of adjacent tracks placed in a reference surface, along which there is provided a succession of noncontiguous sites intended for the storage of digital data, between which there are placed interstitial sites comprising specific digital data intended for another use, characterized in that the transcription of the digital data from and to the substrate is controlled by a periodic sync signal exclusively transcribed by a submultiple of its true frequency by means of the said interstitial sites, which contain a sequence of optically detectable perturbations producing transitions playing the role of a reference in relation to the said periodic sync signal, but whose separation is discernible by those used for the transcription of the said digital data.

14. The substrate as claimed in claim 13, characterized in that the said digital data subjected to transcription generate transitions whose separation is characteristic for the modulation code used; the said modulation code having separations of a duration T and entire multiples of T; the set of transitions contained in the said interstitial sites comprising time intervals between flanks composed of a semi-entire duration equal to T/2 and at least an entire duration T; the said flanks of the same nature being forbidden in the said modulation code.

15. The substrate as claimed in any one of the claims 13 and 14, characterized in that the transcription of the said specific digital data in the said interstitial sites constitutes a preliminary to each transcription of digital data in the sites intended for this transcription.

16. The substrate as claimed in any one of the claims 13 through 15, characterized in that the interstitial sites are regularly spaced out along the said tracks.

17. The substrate as claimed in any one of the claims 13 through 16, characterized in that the each interstitial site comprises at least two pulses.

18. The substrate as claimed in any one of the claims 13 through 17, characterized in that the interstitial sites are pre-engraved and in that the digital data are transcribed in a sensitive thermooptic structure comprising at least one recording layer causing the appearance of the pre-engraving of the said interstitial sites.

EP 0 089 264 B1

# FIG.1

# FIG.2

# FIG.3

1

# FIG.4

HORLOGES 4

$H_R$

$H$

3 CALCUL DU DEPHASAGE

$\Delta\varphi$

REMISE EN PHASE 5

1 LECTURE

$V_L$

2 DETECTION DE DRAPEAU

$V_A$

$\overline{V_A}$ 7

$H_S$

6 TRAITEMENT DES INFORMATIONS LUES

# FIG.5

HORLOGES 4

$H_R$

$H$

1 LECTURE

3 CALCUL DU DEPHASAGE

$\Delta\varphi$

REMISE EN PHASE 5

6 TRAITEMENT DES INFORMATIONS LUES

$H_S$

8

$\overline{H_A}$

$H_A$

# FIG.6

# FIG.7

# FIG.8

FIG.9

EP 0 089 264 B1